# EUROPEAN PATENT APPLICATION

(11) **EP 4 641 855 A1**
(43) Date of publication of application: **29.10.2025**
(21) Application number: 24186539.3
(22) Date of filing: 04.07.2024
(51) Int. Cl.: H02G 11/02, B60L 3/10, B60L 53/16, B60L 53/18, H02G 15/007, H02J 7/00

(54) **MOVABLE CHARGING-CABLE CLAMP**

(30) Priority: 26.04.2024 TW 113115666
(71) Applicant: Delta Electronics, Inc., Taoyuan City 33370 (TW)
(72) Inventor: Wei, Yu-Hsien, 32063 Taoyuan City (TW); Lee, Yu-Chien, 32063 Taoyuan City (TW); Hsien, Hung-Sheng, 32063 Taoyuan City (TW)
(74) Representative: Uexküll & Stolberg

(57) **Abstract**

A movable charging-cable clamp (1, 1a, 1b) is disclosed and includes a clamping component (10, 10a) and a pivot component (20, 20a, 20b). The clamping component (10, 10a) is configured to be fixed on an outer peripheral surface (90) of a charging cable (9). The clamping component (10, 10a) includes a first guide groove (13), which is recessed and disposed around an outer peripheral wall of the clamping component (10, 10a), and is centered at a central axis (C) of the charging cable (9). The pivot component (20, 20a, 20b) includes an annular structure (21, 21a) and a hanging part (23). The annular structure (23) is fitted onto the first guide groove (13) and allows the clamping component (10, 10a) and the charging cable (9) to rotate relative to the pivot component (20, 20a, 20b) around the central axis (C). The hanging portion (23) is disposed adjacent to an outer periphery of the annular structure (21, 21a). The annular structure (21, 21a) provides the charging cable (9) with a degree of freedom of rotation in the axial direction, so as to achieve a middle support point of the charging cable (9).

## Description

### FIELD OF THE INVENTION

The present disclosure relates to a charging-cable clamp, and more particularly to a movable charging-cable clamp including an annular structure to provide the charging cable with a degree of freedom of rotation in the direction of the central axis thereof. Thereby, a middle support point of the charging cable is achieved, it prevents the charging cable from being unable to be straightened and wounding into a circle, and the damages to the charging cable and the charging gun are avoided.

### BACKGROUND OF THE INVENTION

With the continuous development and progress of science and technology, the vehicles on the current market have changed from the traditional gasoline vehicles to the electric vehicles. As time goes by, the number of electric vehicles is increasing. Since the electric vehicles only need to charge the batteries disposed thereon to start on the road, and the conversion of electrical energy is produced without the pollution, so it has a good environmental protection effect.

On the other hand, the charging machines are used for producing the charging process of electric vehicles, and the number of charging machines, such as the upright charging machines or the wall-mounted charging machines on the current market is increasing. Those types of charging machines often have a very long charging cable, so that the charging gun can be expanded to the charging port of the electric vehicle through the charging cable for charging.

When the user uses the charging gun to charge, it has to prevent the charging cable from being scattered on the ground to cause loops and knots. The current charging machine includes a charging-cable clamp to clamp the middle section of the charging cable to provide necessary support, and the charging-cable clamp is connected to the counterweight through a rope, so that the user can lift the charging gun with less effort. The current charging-cable clamp mainly includes two semicircular rubber rings to connect the charging cable through the tight fixing force of the bolts on the iron ring. However, the charging cable and charging-cable clamp cannot slide or rotate relative to each other. Under this structure, when the charging cable is stretched, there will be a section of charging cable adjacent to the connection area of the charging-cable clamp that cannot be straightened. The affected length depends on the original fixed position of the pulley. In addition, even if the charging cable itself is flexible, it will still curl when the charging cable is stretched.

Therefore, there is a need of providing a movable charging-cable clamp including an annular structure to provide the charging cable with a degree of freedom of rotation in the direction of the central axis thereof. Thereby, a middle support point of the charging cable is achieved, it prevents the charging cable from being unable to be straightened and wounding into a circle, the damages to the charging cable and the charging gun are avoided, and the drawbacks encountered by the prior arts are obviated.

### SUMMARY OF THE INVENTION

An object of the present disclosure is to provide a movable charging-cable clamp. With the semi-circular bearing, annular bearing or sheet metal ring, a rotational freedom in the direction of the central axis is provided to realize the middle support point of the charging cable. It effectively prevents the charging cable from being unable to be straightened and wounding into a circle, and the damages to the charging cable and the charging gun are avoided.

Another object of the present disclosure is to provide a movable charging-cable clamp. A clamping component and a pivot component are combined to provide a rotational freedom in the direction of the central axis for the charging cable that is fixed by the clamping component. The clamping component is fixed on an outer peripheral surface of various charging cables through the engagement connection of the two-piece fitting elements. Moreover, when a hanging portion of the pivot component is fixed at a high place through a hanging rope or connected to a pulley with a counterweight, it allows to provide a middle support point for the charging cable. Since the clamping component and the charging cable have the rotational freedom in the direction of the central axis relative to the pivot component, when the user holds the charging gun and pulls the charging cable, the movable charging-cable clamp allows the clamping component and the charging cable to rotate in the direction of the central axis. It helps to avoid the situation where the charging cable cannot be straightened but wound into a circle, and solves the problem of the charging cable curling due to the force. On the other hand, the rotation between the clamping component and the pivot component is achieved through an annular structure such as two semicircular bearings, an annular bearing or a sheet metal ring. The entire structure is compact, easy to assemble, and suitable for all kinds of charging cables. In addition, the hanging portion of the pivot component is combined with the locking tabs of the outer shell sleeve or the outer ring sleeve, and fixed through a latching element with a nut. It helps to simplify the installation of the hanging rope with the movable charging-cable clamp. In this way, the movable charging-cable clamp of the present disclosure provides a support function for the charging cable and also solves the problem of the charging cable being unable to be straightened and wound into a circle. Moreover, the situations that may cause damages to the charging cable and the charging gun are avoided.

In accordance with an aspect of the present disclosure, a movable charging-cable clamp is provided. The movable charging-cable clamp includes a clamping component and a pivot component. The clamping component is configured to be fixed on an outer peripheral surface of a charging cable and includes a first guide groove. The first guide groove is recessed and disposed around an outer peripheral wall of the clamping component, and is centered at a central axis of the charging cable. The pivot component includes an annular structure and a hanging portion. The annular structure is fitted onto the first guide groove and allows the clamping component and the charging cable to rotate relative to the pivot component around the central axis. The hanging portion is disposed adjacent to an outer periphery of the annular structure.

In an embodiment, the clamping component includes a first fitting element and a second fitting element, the second fitting element is at least partially fitted on an outer peripheral wall of the first fitting element, and the first fitting element and the second fitting element are engaged and connected with each other through internal and external threads to form the first guide groove.

In an embodiment, the first fitting element includes a limiting portion and an inward pressurizing portion located at two opposite ends, respectively, and the second fitting element includes a pushing inclined surface, wherein the pushing inclined surface is spatially corresponding to the inward pressurizing portion of the first fitting element, when the first fitting element and the second fitting element are engaged and connected with each other through the internal and external threads, the first guide groove is formed between the limiting portion and the second fitting element, and the pushing inclined surface presses against the inward pressurizing portion to inwardly presses the outer peripheral surface of the charging cable, so that the clamping component is firmly fitted on the outer peripheral surface of the charging cable.

In an embodiment, the inward pressurizing portion includes a plurality of protruding columns surrounding the central axis, and the plurality of protruding columns are parallel to the central axis and protrude outward from one end of the first fitting element.

In an embodiment, the first fitting element includes a hollow portion that penetrates the limiting portion and the inward pressurizing portion, and the hollow portion fits the outer peripheral surface of the charging cable.

In an embodiment, the annular structure includes two semicircular bearing elements, and the two semicircular bearing elements are paired and connected to each other to form the annular structure and fit on the first guide groove.

In an embodiment, the pivot component further includes an outer shell sleeve, an inner ring surface of the outer shell sleeve includes a second guide groove, the second guide groove is spatially corresponding to the annular structure formed by the two semicircular bearing elements paired and connected to each other, and the second guide groove partially accommodates the annular structure, wherein the outer shell sleeve is allowed to rotate relative to the clamping component through the annular structure.

In an embodiment, the outer shell sleeve includes two half-shell sleeves, the bottoms of the two half-shell sleeves each have a threaded hole, the threaded holes of the two half-shell sleeves are connected and fastened with each other, the tops of the two half-shell sleeves each have a locking tab, and the hanging portion is clamped between the locking tabs of the two half-shell sleeves.

In an embodiment, the locking tab includes a first fastening aperture, the hanging portion includes a second fastening aperture, and the pivot component further includes a latching element that passes through the first fastening aperture and the second fastening aperture and clamps the hanging portion between the locking tabs of the two half-shell sleeves.

In an embodiment, the latching element is engaged with a nut to clamp the hanging portion between the locking tabs of the two half-shell sleeves.

In an embodiment, the annular structure is a sliding bearing, and an inner ring of the sliding bearing is fitted to the first guide groove.

In an embodiment, the pivot component further includes an outer ring sleeve that is fitted to an outer ring of the sliding bearing, wherein the outer ring sleeve allows rotation relative to the clamping component through the sliding bearing.

In an embodiment, the outer ring sleeve includes a locking tab disposed at a top thereof, the locking tab includes a first fastening aperture, the hanging portion includes a second fastening aperture, and the pivot component further includes a latching element, wherein the latching element clamps the hanging portion on the locking tab through the first fastening aperture and the second fastening aperture.

In an embodiment, the annular structure is composed of a thin metal ring.

In an embodiment, the annular structure further includes a locking tab disposed on a periphery thereof, the locking tab includes a first fastening aperture, the hanging portion includes a second fastening aperture, and the pivot component further includes a latching element, wherein the latching element fastens the locking tab and the hanging portion through the first fastening aperture and the second fastening aperture.

In an embodiment, the hanging portion includes a through hole disposed on a top surface thereof, and the through hole is configured to be passed through by a hanging rope and be fixed to suspend the movable charging-cable clamp.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a structural perspective view illustrating a movable charging-cable clamp holding a charging cable according to a first embodiment of the present disclosure;
FIG. 2 is a structural perspective view illustrating the movable charging-cable clamp according to the first embodiment of the present disclosure;
FIG. 3 is a schematic exploded view illustrating the movable charging-cable clamp according to the first embodiment of the present disclosure;
FIG. 4 is a cross-sectional structural view illustrating the movable charging-cable clamp according to the first embodiment of the present disclosure;
FIG. 5 is a structural perspective view illustrating a movable charging-cable clamp holding a charging cable according to a second embodiment of the present disclosure;
FIG. 6 is a structural perspective view illustrating the movable charging-cable clamp according to the second embodiment of the present disclosure;
FIG. 7 is a schematic exploded view illustrating the movable charging-cable clamp according to the second embodiment of the present disclosure;
FIG. 8 is a cross-sectional structural view illustrating the movable charging-cable clamp according to the second embodiment of the present disclosure;
FIG. 9 is a structural perspective view illustrating a movable charging-cable clamp holding a charging cable according to a third embodiment of the present disclosure;
FIG. 10 is a structural perspective view illustrating the movable charging-cable clamp according to the third embodiment of the present disclosure;
FIG. 11 is a schematic exploded view illustrating the movable charging-cable clamp according to the third embodiment of the present disclosure; and
FIG. 12 is a cross-sectional structural view illustrating the movable charging-cable clamp according to the third embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "inner," "outer," "top," "bottom" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second, and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments.

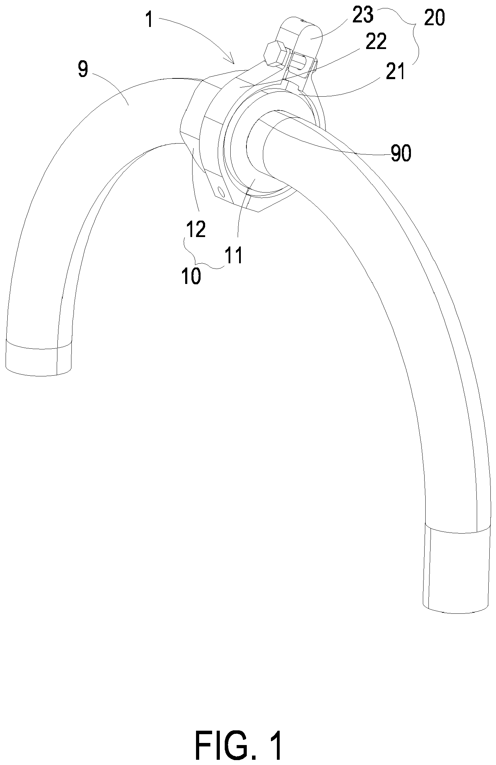

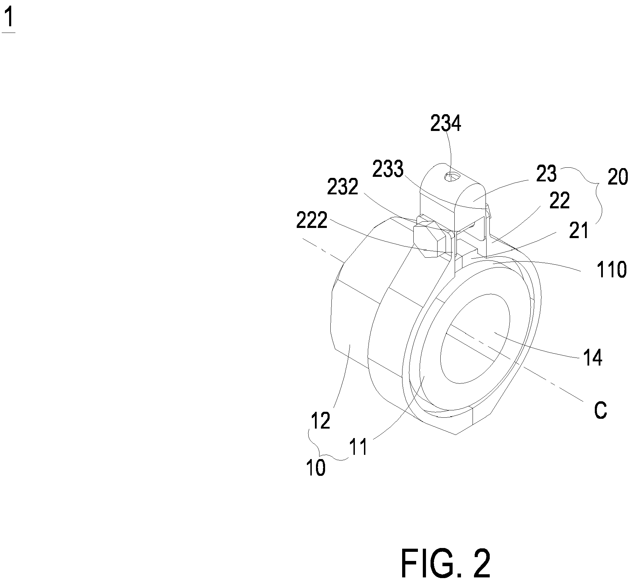

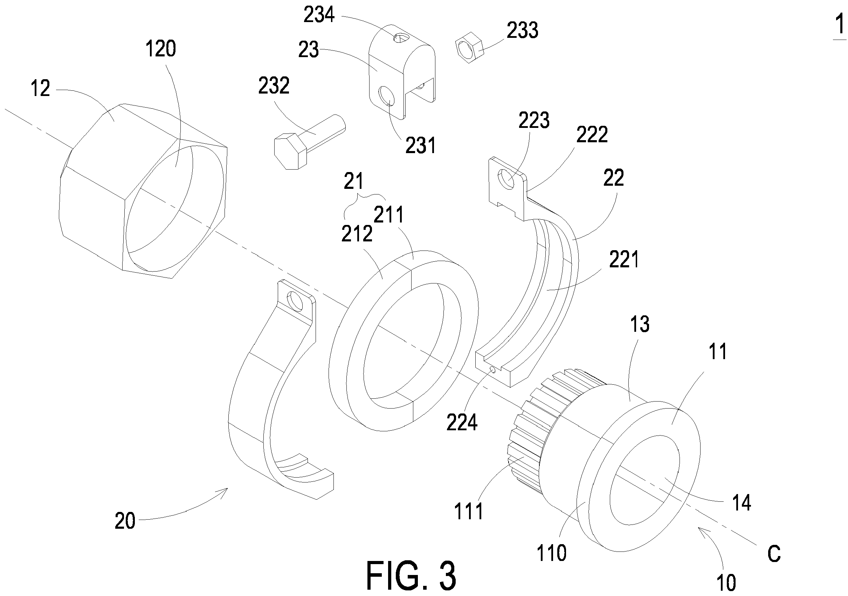

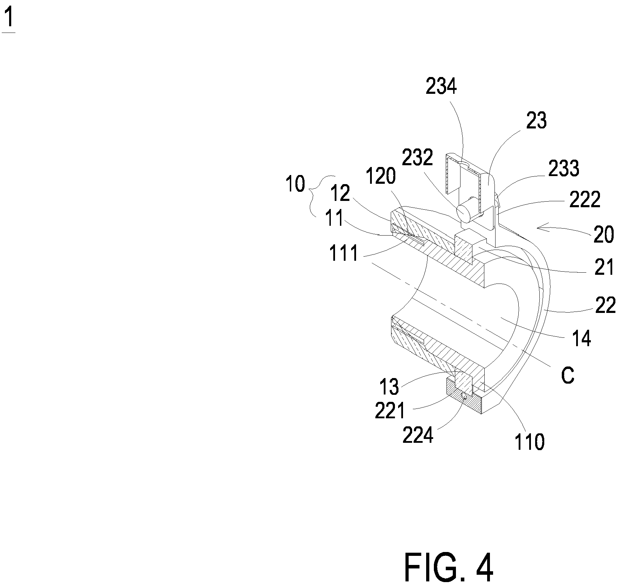

FIG. 1 is a structural perspective view illustrating a movable charging-cable clamp holding a charging cable according to a first embodiment of the present disclosure. FIG. 2 is a structural perspective view illustrating the movable charging-cable clamp according to the first embodiment of the present disclosure. FIG. 3 is a schematic exploded view illustrating the movable charging-cable clamp according to the first embodiment of the present disclosure. FIG. 4 is a cross-sectional structural view illustrating the movable charging-cable clamp according to the first embodiment of the present disclosure. Referring to FIG. 1 to FIG. 4, the present disclosure provides a movable charging-cable clamp 1, to realize a middle support point of a charging cable 9, provide the charging cable 9 with a degree of freedom of rotation in the direction of the central axis thereof, and prevent the charging cable 9 from being unable to be straightened and wound into a circle. In the embodiment, the movable charging-cable clamp 1 includes a clamping component 10 and a pivot component 20. The clamping component 10 is configured to be fixed on an outer peripheral surface 90 of the charging cable 9 by means of clamping or fitting. In the embodiment, the clamping component 10 includes a first guide groove 13. The first guide groove 13 is recessed and disposed around an outer peripheral wall of the clamping component 10, and is centered at a central axis C of the charging cable 9. In addition, the pivot component 20 includes an annular structure 21 and a hanging portion 23. The annular structure 21 is correspondingly fitted onto the first guide groove 13 and allows the clamping component 10 and the charging cable 9 to rotate relative to the pivot component 20 around the central axis C. In other words, the clamping component 10 and the charging cable 9 have the rotational freedom in the direction of the central axis C relative to the pivot component 20.

Preferably but not exclusively, in the embodiment, the clamping component 10 is fitted and fixed to the outer peripheral surface 90 of the charging cable 9 in a two-piece combination. The clamping component 10 includes a first fitting element 11 and a second fitting element 11. The second fitting element 12 has an inner ring surface, which is at least partially fitted on an outer peripheral wall of the first fitting element 11. In that, the first fitting element 11 and the second fitting element 12 are engaged and connected with each other through internal and external threads, and the first guide groove 13 is formed on the outer peripheral wall of the first fitting element 11.

Moreover, in the embodiment, the first fitting element 11 includes a limiting portion 110 and an inward pressurizing portion 111 located at two opposite ends, respectively. The second fitting element 12 includes a pushing inclined surface 120. The pushing inclined surface 120 is spatially corresponding to the inward pressurizing portion 111 of the first fitting element 11. In the embodiment, when the first fitting element 11 and the second fitting element 12 are engaged and connected with each other through the internal and external threads, the first guide groove 13 is formed between the limiting portion 110 and the second fitting element 12, and the pushing inclined surface 120 presses against the inward pressurizing portion 111 to inwardly presses the outer peripheral surface 90 of the charging cable 9 during the engagement and the connection of the first fitting element 11 and the second fitting element 12, so that the inward pressurizing portion 111 is pressed inward against the outer peripheral surface 90 of the charging cable 9. Thus, the clamping component 10 is firmly fitted on the outer peripheral surface 90 of the charging cable 9. In the embodiment, the first fitting element 11 includes a hollow portion 14 that penetrates the limiting portion 110 and the inward pressurizing portion 111, and the hollow portion 14 is configured to fit the outer peripheral surface 90 of the charging cable 9. Preferably but not exclusively, the inward pressurizing portion 111 further includes a plurality of protruding columns surrounding the central axis C, and the plurality of protruding columns are parallel to the central axis C and protrude outward from one end of the first fitting element 11 connected to the second fitting element 12. When the first fitting element 11 and the second fitting element 12 are paired with each other and connected through the internal and external threads, the pushing inclined surface 120 approaches and presses the plurality of protruding columns inward, so that the plurality of protruding columns are firmly pressed against the outer peripheral surface 90 of the charging cable 9, and the clamping component 10 is fixed on the charging cable 9. Certainly, the way in which the clamping component 10 is fixed to the charging cable 9 through the engagement and connection of the first fitting element 11 and the second fitting element 12 is not limited to the aforementioned embodiment. Any mechanism that can assemble the clamping component 10 and fix the clamping component 10 to the charging cable 9 is suitable for the present disclosure. Notably, after the clamping component 10 is fixed to the charging cable 9, the structure of the first guide groove 13 is formed on the outer peripheral wall, and the first guide groove 13 is centered at the central axis C of the charging cable 9.

In the embodiment, the pivot component 20 provides the clamping component 10 and the charging cable 9 with a degree of rotational freedom in the direction of the central axis C through the annular structure 21. In the embodiment, the annular structure 21 includes two semicircular bearing elements 211, 212, and the two semicircular bearing elements 211, 212 are paired and connected to each other to form the annular structure 21 and fit on the first guide groove 13. Moreover, in the embodiment, the pivot component 20 further includes an outer shell sleeve 22. The outer shell sleeve 22 includes a second guide groove 221 disposed on an inner ring surface thereof. The second guide groove 221 is spatially corresponding to the first guide groove 13 of the first clamping component 10 and the annular structure 21 formed by the two semicircular bearing elements 211, 212 paired and connected to each other. The annular structure 21 has an inner annular surface and an outer annular surface partially accommodated in the first guide groove 13 of the clamping component 10 and the second guide groove 221 of the outer shell sleeve 22, respectively. In the embodiment, the outer shell sleeve 22 is allowed to rotate relative to the clamping component 10 through the annular structure 21.

Preferably but not exclusively, in the embodiment, the outer shell sleeve 22 includes two half-shell sleeves, the bottoms of the two half-shell sleeves each have a threaded hole 224. The threaded holes 224 of the two half-shell sleeves are connected and fastened with each other. In addition, the tops of the two half-shell sleeves each have a locking tab 222, and the hanging portion 23 is clamped between the locking tabs 222 of the two half-shell sleeves. Preferably but not exclusively, in the embodiment, the locking tab 222 includes a first fastening aperture 223, the hanging portion 23 includes a second fastening aperture 231, and the pivot component 20 further includes a latching element 232. The latching element 232 passes through the first fastening aperture 223 and the second fastening aperture 231 and clamps the hanging portion 23 between the locking tabs 222 of the two half-shell sleeves. Preferably but not exclusively, the latching element 232 is engaged with a nut 233 to clamp the hanging portion 23 between the locking tabs 222 of the two half-shell sleeves. Certainly, the connection way of the outer shell sleeve 22 and the hanging portion 23 is adjustable according to the practical requirements, and the present disclosure is not limited thereto.

Notably, in the embodiment, the hanging portion 23 is disposed adjacent to an outer periphery of the annular structure 21, so as to realize the hanging function. In the embodiment, the hanging portion 23 further includes a through hole 234 disposed on a top surface thereof, and the through hole 234 is configured to be passed through by a hanging rope (not shown) and be fixed to suspend the movable charging-cable clamp 1 and the charging cable 9 clamped thereby. Preferably but not exclusively, in an embodiment, one end of the hanging rope passing through the through hole 234 is wrapped around the latching element 232 and connected with the pivot component 20. It helps to simplify the installation of the hanging rope. Certainly, the present disclosure is not limited thereto. In addition, the other end of the hanging rope is fixed at a high place or connected to a pulley with a counterweight. Notably, the degree of rotational freedom of the clamping component 10 and the charging cable 9 in the direction of the central axis C is not affected by the arrangement of the hanging rope. In the embodiment, the clamping component 10 and the charging cable 9 have the rotational freedom in the direction of the central axis C relative to the pivot component 20, and the hanging portion 23 of the pivot component 20 is fixed at a high place through a hanging rope or connected with a pulley and a counterweight, so that the middle support point for the charging cable 9 is achieved. When the user holds the charging gun and pulls the charging cable 9, the movable charging-cable clamp 1 allows the clamping component 10 and the charging cable 9 to rotate in the central axis direction C. Thereby, it helps to avoid the situation where the charging cable 9 cannot be straightened but wound into a circle, and solves the problem of the charging cable 9 curling due to the force. Certainly, the present disclosure is not limited thereto.

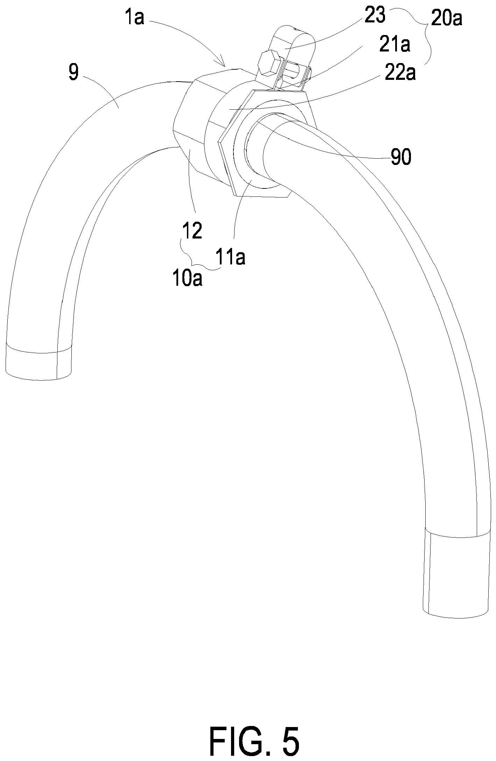

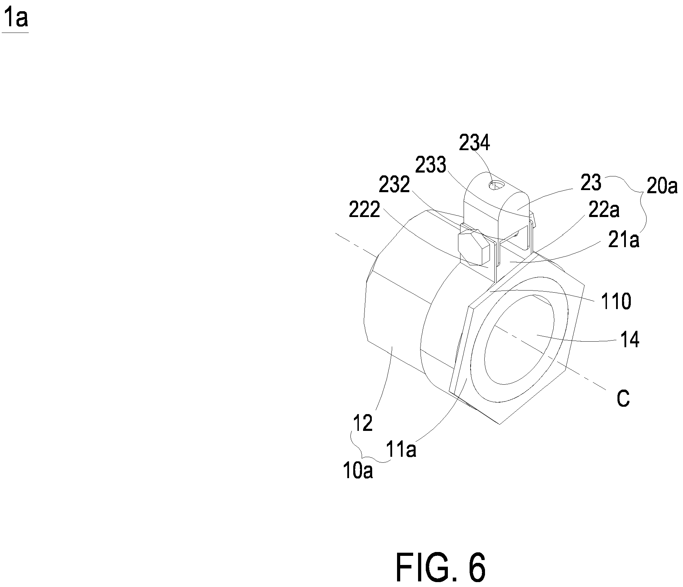

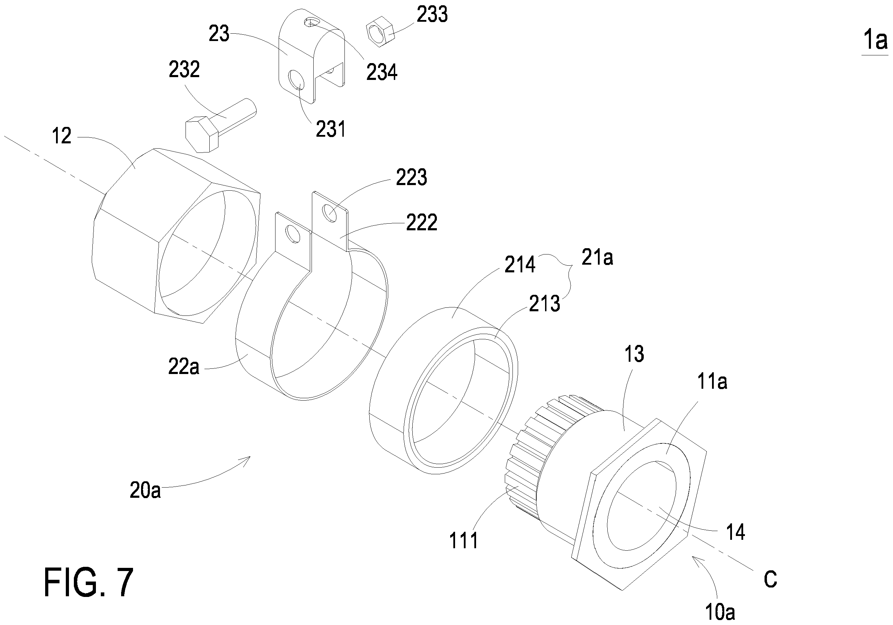

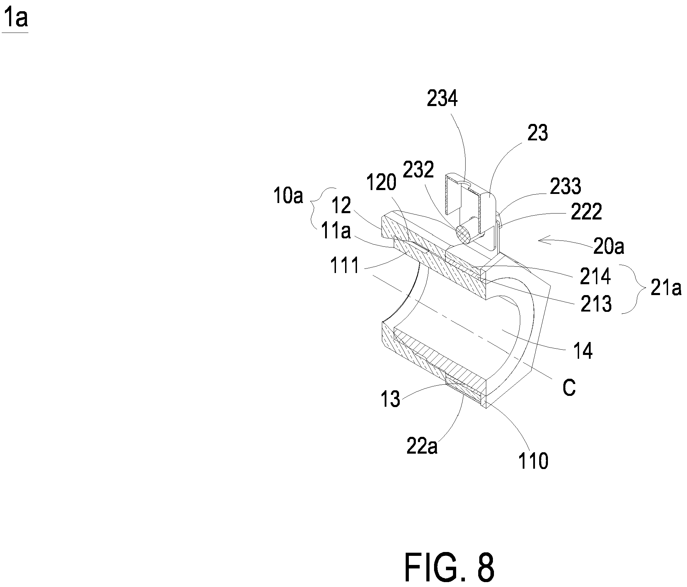

FIG. 5 is a structural perspective view illustrating a movable charging-cable clamp holding a charging cable according to a second embodiment of the present disclosure. FIG. 6 is a structural perspective view illustrating the movable charging-cable clamp according to the second embodiment of the present disclosure. FIG. 7 is a schematic exploded view illustrating the movable charging-cable clamp according to the second embodiment of the present disclosure. FIG. 8 is a cross-sectional structural view illustrating the movable charging-cable clamp according to the second embodiment of the present disclosure. In the embodiment, the structures, elements and functions of the movable charging-cable clamp 1a are similar to those of the movable charging-cable clamp 1 of FIG. 1 to FIG. 4, and are not redundantly described herein. Referring to FIG. 5 to FIG. 8, in the embodiment, a movable charging-cable clamp 1a is further provided, and includes a pivot component 20a providing the rotational freedom in the direction of the central axis C for the clamping component 10a and the charging cable 9 through the annular structure 21a.

In the embodiment, the annular structure 21a is a sliding bearing, which includes an inner ring 213 and an outer ring 214. In the embodiment, the inner ring 213 of the sliding bearing is fitted to the first guide groove 13. Moreover, in the embodiment, the pivot component 20a further includes an outer ring sleeve 22a that is fitted to the outer ring 214 of the sliding bearing. Preferably but not exclusively, the outer ring sleeve 22a is integrally formed by an elastic metal ring, which can be directly fitted on the outer ring 214 of the sliding bearing. The outer ring sleeve 22a allows rotation relative to the clamping component 10a through the sliding bearing.

In the embodiment, the outer ring sleeve 22a includes a locking tab 222 disposed at a top thereof. The locking tab 222 includes a first fastening aperture 223, and the hanging portion 23 includes a second fastening aperture 231. Moreover, the pivot component 20a further includes a latching element 232. The latching element 232 clamps the hanging portion 23 on the locking tab 222 through the first fastening aperture 223 and the second fastening aperture 231. Preferably but not exclusively, in the embodiment, the latching element 232 is engaged with a nut 233 to clamp the hanging portion 23 between the locking tabs 222 of the outer ring sleeve 22a. Certainly, the connection way of the outer ring sleeve 22a and the hanging portion 23 is adjustable according to the practical requirements, and the present disclosure is not limited thereto.

On the other hand, in the embodiment, the clamping component 10a is also fixed to the outer peripheral surface 90 of the charging cable 9 by combining the first fitting element 11 and the second fitting element 12. Preferably but not exclusively, in the embodiment, the limiting portion 110 of the first fitting element 11 and the second fitting element 12 both have a hexagonal outline, and it facilitates the operation of the first fitting element 11 and the second fitting element 12 to be engaged and connected with each other, so that the first fitting element 11 and the second fitting element 12 are fixed to the charging cable 9. Certainly, the outline of the limiting portion 110 is adjustable according to the practical requirements, and the first guide groove 13 formed between the limiting portion 110 and the second fitting element 12 is not affected by it. It won't be redundantly described herein.

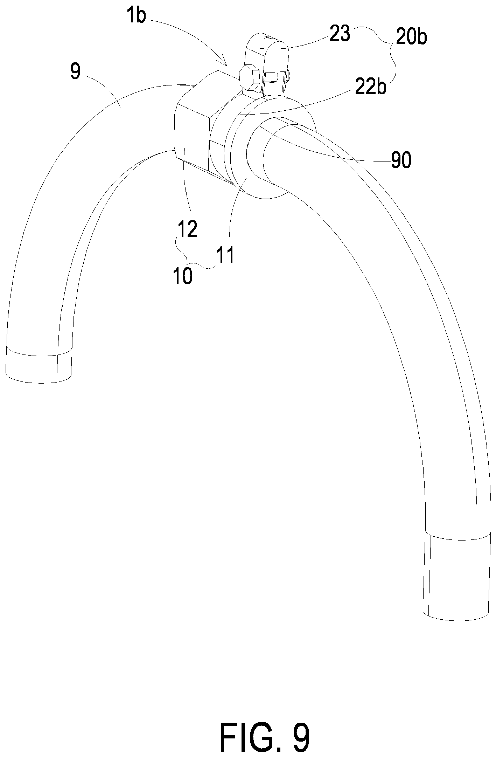

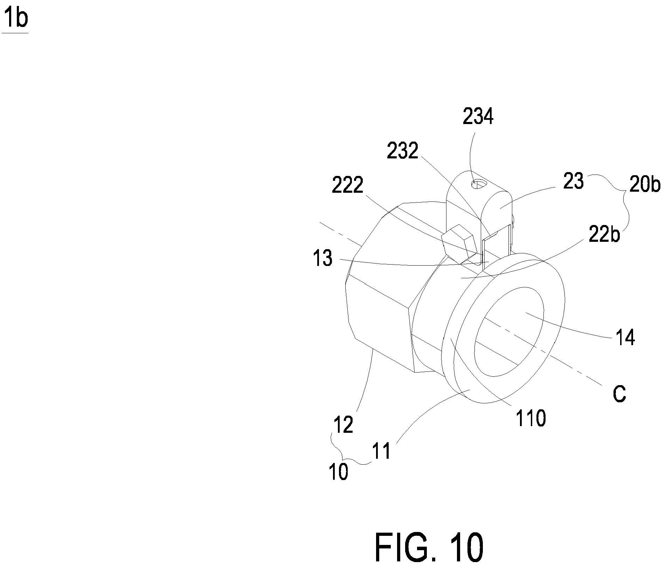

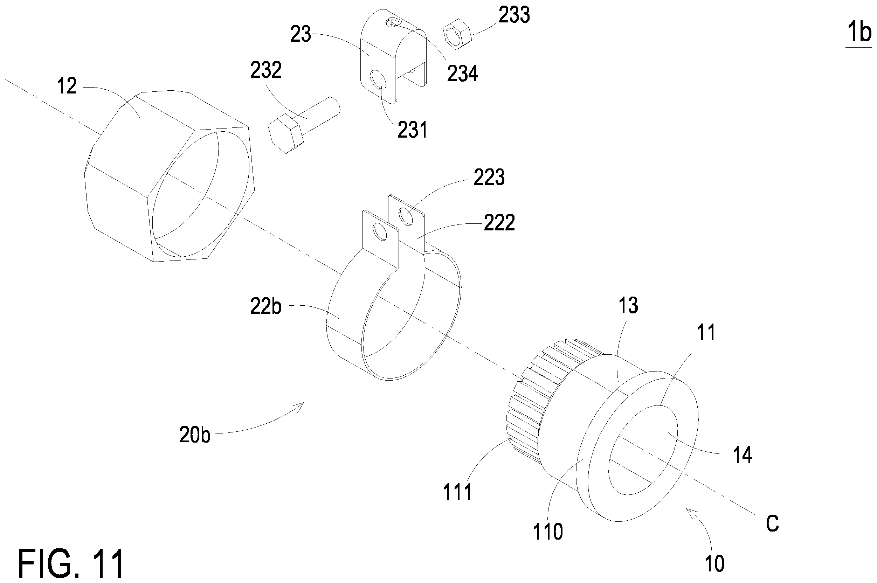

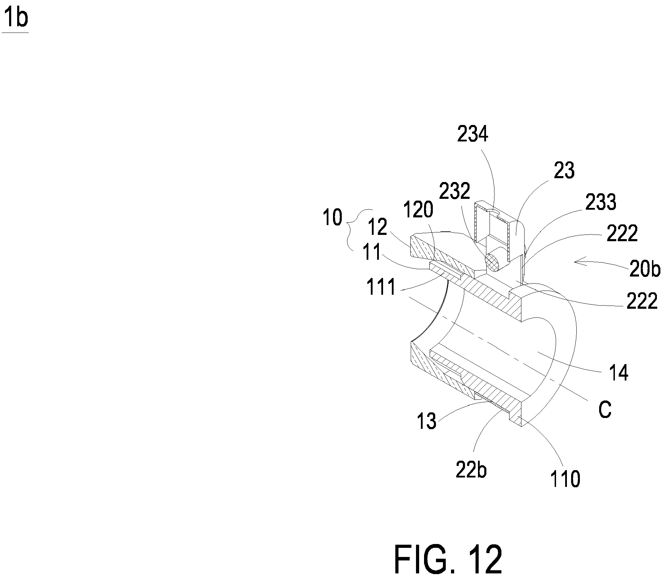

FIG. 9 is a structural perspective view illustrating a movable charging-cable clamp holding a charging cable according to a third embodiment of the present disclosure. FIG. 10 is a structural perspective view illustrating the movable charging-cable clamp according to the third embodiment of the present disclosure. FIG. 11 is a schematic exploded view illustrating the movable charging-cable clamp according to the third embodiment of the present disclosure. FIG. 12 is a cross-sectional structural view illustrating the movable charging-cable clamp according to the third embodiment of the present disclosure. In the embodiment, the structures, elements and functions of the movable charging-cable clamp 1b are similar to those of the movable charging-cable clamp 1 of FIG. 1 to FIG. 4, and are not redundantly described herein. Referring to FIG. 9 to FIG. 12, in the embodiment, a movable charging-cable clamp 1b is further provided, and includes a pivot component 20b providing the rotational freedom in the direction of the central axis C for the clamping component 10 and the charging cable 9 through a thin metal ring 22b.

In the embodiment, the pivot component 20b is directly fitted on the first guide groove 13 of the clamping component 10 through the thin metal ring 22b. The thin metal ring 22b further includes a locking tab 222 disposed on a periphery thereof. The locking tab 222 includes a first fastening aperture 223. In addition, the hanging portion 23 includes a second fastening aperture 231, and the pivot component 20b further includes a latching element 232. In the embodiment, the latching element 232 fastens the locking tab 222 and the hanging portion 23 through the first fastening aperture 223 and the second fastening aperture 231. Preferably but not exclusively, the latching element 232 is engaged with a nut 233 to clamp the hanging portion 23 between the locking tabs 222 of the thin metal ring 22b. Certainly, the connection way of the thin metal ring 22b and the hanging portion 23 is adjustable according to the practical requirements, and the present disclosure is not limited thereto.

In summary, the present disclosure provides a movable charging-cable clamp. With the semi-circular bearing, annular bearing or sheet metal ring, a rotational freedom in the direction of the central axis is provided to realize the middle support point of the charging cable. It effectively prevents the charging cable from being unable to be straightened and wounding into a circle, and the damages to the charging cable and the charging gun are avoided. In the present disclosure, the clamping component and the pivot component are combined to provide a rotational freedom in the direction of the central axis for the charging cable that is fixed by the clamping component. The clamping component is fixed on an outer peripheral surface of various charging cables through the engagement connection of the two-piece fitting elements. Moreover, when a hanging portion of the pivot component is fixed at a high place through a hanging rope or connected to a pulley with a counterweight, it allows to provide a middle support point for the charging cable. Since the clamping component and the charging cable have the rotational freedom in the direction of the central axis relative to the pivot component, when the user holds the charging gun and pulls the charging cable, the movable charging-cable clamp allows the clamping component and the charging cable to rotate in the direction of the central axis. It helps to avoid the situation where the charging cable cannot be straightened but wound into a circle, and solves the problem of the charging cable curling due to the force. On the other hand, the rotation between the clamping component and the pivot component is achieved through an annular structure such as two semicircular bearings, an annular bearing or a sheet metal ring. The entire structure is compact, easy to assemble, and suitable for all kinds of charging cables. In addition, the hanging portion of the pivot component is combined with the locking tabs of the outer shell sleeve or the outer ring sleeve, and fixed through a latching element with a nut. It helps to simplify the installation of the hanging rope with the movable charging-cable clamp. In this way, the movable charging-cable clamp of the present disclosure provides a support function for the charging cable and also solves the problem of the charging cable being unable to be straightened and wound into a circle. Moreover, the situations that may cause damages to the charging cable and the charging gun are avoided.

## Claims

1. A movable charging-cable clamp (1, 1a, 1b), **characterized by** comprising:
a clamping component (10, 10a) configured to be fixed on an outer peripheral surface (90) of a charging cable (9) and comprising a first guide groove (13), wherein the first guide groove (13) is recessed and disposed around an outer peripheral wall of the clamping component (10, 10a), and is centered at a central axis (C) of the charging cable (9); and
a pivot component (20, 20a, 20b) comprising an annular structure (21, 21a) and a hanging portion (23), wherein the annular structure (21, 21a) is fitted onto the first guide groove (13) and allows the clamping component (10, 10a) and the charging cable (9) to rotate relative to the pivot component (20, 20a, 20b) around the central axis (C), wherein the hanging portion (23) is disposed adjacent to an outer periphery of the annular structure (21, 21a).

2. The movable charging-cable clamp (1, 1a, 1b) according to claim 1, wherein the clamping component (10, 10a) comprises a first fitting element (11) and a second fitting element (12), the second fitting element (12) is at least partially fitted on an outer peripheral wall of the first fitting element (11), and the first fitting element (11) and the second fitting element (12) are engaged and connected with each other through internal and external threads to form the first guide groove (13).

3. The movable charging-cable clamp (1, 1a, 1b) according to claim 2, wherein the first fitting element (11) comprises a limiting portion (110) and an inward pressurizing portion (111) located at two opposite ends, respectively, and the second fitting element (12) comprises a pushing inclined surface (120), wherein the pushing inclined surface (120) is spatially corresponding to the inward pressurizing portion (111) of the first fitting element (11), when the first fitting element (11) and the second fitting element (12) are engaged and connected with each other through the internal and external threads, the first guide groove (13) is formed between the limiting portion (110) and the second fitting element (12), and the pushing inclined surface (120) presses against the inward pressurizing portion (111) to inwardly presses the outer peripheral surface (90) of the charging cable (9), so that the clamping component (10, 10a) is firmly fitted on the outer peripheral surface (90) of the charging cable (9).

4. The movable charging-cable clamp (1, 1a, 1b) according to claim 3, wherein the inward pressurizing portion (111) comprises a plurality of protruding columns surrounding the central axis (C), and the plurality of protruding columns are parallel to the central axis (C) and protrude outward from one end of the first fitting element (11).

5. The movable charging-cable clamp (1, 1a, 1b) according to claim 1, wherein the first fitting element (11) comprises a hollow portion (14) that penetrates the limiting portion (110) and the inward pressurizing portion (111), and the hollow portion (14) fits the outer peripheral surface (90) of the charging cable (9).

6. The movable charging-cable clamp (1) according to claim 1, wherein the annular structure (21) comprises two semicircular bearing elements (211, 212), and the two semicircular bearing elements (211, 212) are paired and connected to each other to form the annular structure (21) and fit on the first guide groove (13).

7. The movable charging-cable clamp (1) according to claim 6, wherein the pivot component (20) further comprises an outer shell sleeve (22), an inner ring surface of the outer shell sleeve (22) comprises a second guide groove (221), the second guide groove (221)is spatially corresponding to the annular structure (21) formed by the two semicircular bearing elements (211, 212) paired and connected to each other, and the second guide groove (221) partially accommodates the annular structure (21), wherein the outer shell sleeve (22) is allowed to rotate relative to the clamping component (10) through the annular structure (21).

8. The movable charging-cable clamp (1) according to claim 7, wherein the outer shell sleeve (22) comprises two half-shell sleeves, the bottoms of the two half-shell sleeves each have a threaded hole (224), the threaded holes (224) of the two half-shell sleeves are connected and fastened with each other, the tops of the two half-shell sleeves each have a locking tab (222), and the hanging portion (23) is clamped between the locking tabs (222) of the two half-shell sleeves.

9. The movable charging-cable clamp (1) according to claim 8, wherein the locking tab (222) comprises a first fastening aperture (223), the hanging portion (23) comprises a second fastening aperture (231), and the pivot component (20) further comprises a latching element (232) that passes through the first fastening aperture (223) and the second fastening aperture (231) and clamps the hanging portion (23) between the locking tabs (222) of the two half-shell sleeves.

10. The movable charging-cable clamp (1) according to claim 9, wherein the latching element (232) is engaged with a nut (233) to clamp the hanging portion (23) between the locking tabs (222) of the two half-shell sleeves.

11. The movable charging-cable clamp (1a) according to claim 1, wherein the annular structure is a sliding bearing, and an inner ring (213) of the sliding bearing is fitted to the first guide groove (13).

12. The movable charging-cable clamp (1a) according to claim 11, wherein the pivot component (20a) further comprises an outer ring sleeve (22a) that is fitted to an outer ring (234) of the sliding bearing, wherein the outer ring sleeve (22a) allows rotation relative to the clamping component (10a) through the sliding bearing.

13. The movable charging-cable clamp (1a) according to claim 12 wherein the outer ring sleeve (22a) comprises a locking tab (222) disposed at a top thereof, the locking tab (222) comprises a first fastening aperture (223), the hanging portion (23) comprises a second fastening aperture (231), and the pivot component (20a) further comprises a latching element (232), wherein the latching element (232) clamps the hanging portion (23) on the locking tab through the first fastening aperture and the second fastening apertures.

14. The movable charging-cable clamp (1b) according to claim 1, wherein the annular structure (20b) is composed of a thin metal ring (22b).

15. The movable charging-cable clamp (1, 1a, 1b) according to claim 1, wherein the annular structure (21, 21a) further comprises a locking tab (222) disposed on a periphery thereof, the locking tab (222) comprises a first fastening aperture (223), the hanging portion (23) comprises a second fastening aperture (231), and the pivot component (20, 20a, 20b) further comprises a latching element (232), wherein the latching element (232) fastens the locking tab (222) and the hanging portion (22) through the first fastening aperture (223) and the second fastening aperture (231), wherein the hanging portion (23) comprises a through hole (234) disposed on a top surface thereof, and the through hole (234) is configured to be passed through by a hanging rope and be fixed to suspend the movable charging-cable clamp (1, 1a, 1b).
